# EUROPEAN PATENT SPECIFICATION

(11) **EP 4 409 339 B1**
(45) Date of publication and mention of the grant of the patent: **18.02.2026**
(21) Application number: 22850743.0
(22) Date of filing: 27.12.2022
(51) Int. Cl.: G02B 5/28, G02B 26/00

(54) **MICROFABRICATED TOP-HAT TUNABLE FILTER**
MIKROHERGESTELLTER ABSTIMMBARER TOP-HAT-FILTER
FILTRE ACCORDABLE HAIT-DE-FORME MICROFABRIQUÉ

(30) Priority: 21.12.2022 PT 2022118428
(43) Date of publication of application: 07.08.2024
(73) Proprietor: Bosch Car Multimedia Portugal, S.A., 4705-820 Braga (PT); Universidade do Minho, 4700-320 Braga (PT)
(72) Inventor: RIBEIRO CORREIA, Alexandre Manuel, 4580-591 Mouriz (PT); EELES, Alexander Simon, 4705-820 Braga (PT); GENTILE, Fabio, 4705-820 Braga (PT); AZEVEDO GASPAR, João Carlos, 4700-305 Braga (PT); BRITO DA SILVA, Carlos Filipe, 4705-820 Braga (PT); TRINDADE DE AGUIAM, Diogo Elói, 4715-330 Braga (PT)
(74) Representative: Couto, Cláudia
(86) International application number: PCT/IB2022/062807
(87) International publication number: WO 2024/134264

(56) References cited:
- US-B2- 11 239 626
- PARASHAR AVINASH ET AL: "Three Cavity Tunable MEMS Fabry Perot Interferometer", SENSORS, vol. 7, no. 12, 1 December 2007 (2007-12-01), CH, pages 3071 - 3083, XP093082168, ISSN: 1424-8220, DOI: 10.3390/s7123071

## Description

### Technical Field

The present application describes a tunable optical filter with a top-hat pass band shape.

### Background art

Existing solutions nowadays comprise the use of low angle shift (LAS) optical filters, for lidar applications. These filters have an increased angle of incidence range, but they are static filter which are not tunable in wavelength. Particularly, document US2013329232A describes a controllable Fabry-Perot interferometers which are produced with Microelectromechanical system (MEMS) technology. The suggested interferometer arrangement has both an electrically tunable interferometer and a reference interferometer on the same substrate. The temperature drift is measured with the reference interferometer and this information is used for compensating the measurement with the tunable interferometer. The measurement accuracy and stability can thus be improved and requirements for packaging are lighter.

Until present days, there have been several research developments in the field of tunable Fabry Perot optical filters, with a particular focus on portable spectrometry applications and spectral imaging. In general, the suggested developments in these MEMS devices have a circular membrane with an annular ring around the edge of the membrane for actuation. The devices achieve large area for MEMS filters, but since they are single cavity Fabry-Perot filters, they have the caveat of a very limited angular range.

For the specific case of the present development, it is of core interest the first part of the work disclosed in *"*Three cavity Tunable MEMS Fabry Perot interferometer", Avinash Parashar et al., where it is studied the behaviour of equally spaced cavities. The tuning of these cavities on a desired pass band range is obtained by increasing or decreasing the spacing between the mirrors by the same amount. Additionally, document DE102019212986 describes a Fabry-Perot interferometer (1a; 1b; 1c), comprising: a first mirror (2a; 2b; 2c); and a second mirror (3a; 3b; 3c) spaced from the first mirror (2a; 2b; 2c) such that the first mirror (2a; 2b; 2c) and the second mirror (3a; 3b; 3c) form an optical resonator; wherein the first mirror (2a; 2b; 2c) and/or wherein the second mirror (3a; 3b; 3c) comprises a plurality of layers (21a-25a; 31a-35a); wherein the thicknesses of the layers (21a-25a; 31a-35a) are chosen such that optical path lengths corresponding to the thicknesses of the layers (21a-25a; 31a-35a) are at least partially different from each other.

### Summary

The present invention describes a Tunable optical filter adapted to be installed over a top surface of a sensor, comprising a set of at least three stacked dielectric mirrors parallelly adjacent to the plane of installation of the sensor, the at least three stacked dielectric mirrors comprise an upper mirror, an intermediate mirror and a lower mirror, wherein the set of at least three stacked mirrors is spaced within a variable distance to create at least two independent and adjacently equal volumetry cavities between the upper mirror and the intermediate mirror and between the intermediate mirror and the lower mirror.

The intermediate mirror is fixed with regard to a perpendicular plane of installation of the sensor.

The upper mirror and the lower mirror are movable with regard to a perpendicular plane of installation of the sensor.

The upper mirror and the lower mirror movements are activated by means of actuation electrodes which are configured to ensure equal distancing between the upper mirror and the intermediate mirror and between the intermediate mirror and the lower mirror.

Yet in another proposed embodiment of present invention, the intermediate mirror comprises higher reflectance than the upper mirror and the lower mirror.

Yet in another proposed embodiment of present invention, the intermediate mirror comprises lower reflectance than the upper mirror and the lower mirror.

Yet in another proposed embodiment of present invention, the upper mirror and the lower mirror are supported by independent inner movable frames which are anchored to independent outer fixed frames by a set of independent springs.

Yet in another proposed embodiment of present invention, a surrounding gap between the inner movable frame and the outer fixed frame is filled with sets of electrodes comprised of actuation electrodes and sensing electrodes.

Yet in another proposed embodiment of present invention, the actuation electrodes comprise a set of electrodes with asymmetric vertical heights and minimized lateral gaps between them, said electrodes being sequentially fixed to the outer fixed frame and fixed to the inner movable frame.

Yet in another proposed embodiment of present invention, the actuation electrodes, fixed to the inner movable frame, share the same electrical potential, the actuation electrodes, fixed to the outer fixed frame, share also the same electrical potential, and where a potential difference is applied between said actuation electrodes fixed to the outer fixed frame and said actuation electrodes fixed to the inner movable frame.

Yet in another proposed embodiment of present invention, the sensing electrodes comprise the same geometry of the actuation electrodes and are positioned in a perpendicular arrangement with regard to the actuation electrodes.

Yet in another proposed embodiment of present invention, a nominal distance between the upper mirror, intermediate mirror and lower mirror structure is ensured by a set of spacers which promote the mechanical support between the outer fixed frame of the lower mirror with the inner movable frame of the intermediate mirror, and of the inner movable frame of the intermediate mirror with the outer fixed frame of the upper mirror.

Yet in another proposed embodiment of present invention, an outer surface of the lower mirror and an outer surface of the upper mirror, both outer surfaces being external to the adjacently equal volumetry cavities, comprise an anti-reflection coating.

### General Description

The present application describes a tunable optical filter which, in one particular application, is optimized for use in LiDAR systems. The present invention disclosure enables the improvement of prior art performance, in particular with respect to the improvement of the acceptance angle, which is crucial for use in LiDAR systems, and by providing a rectangular aperture which can be matched to detector arrays.

In LiDAR systems and applications, controlling and monitoring operating wavelengths is of crucial importance. In the receiving units (Rx) of the LiDAR systems, it is necessary to filter out all the radiation other than the operating wavelength in order to maximise the signal-to-noise (SNR) ratio. The light emitted by the transmitting unit (Tx) of the LiDAR systems needs to remain in the pass band of the receiving unit (Rx) to ensure that the signal is not blocked by the filters therein enclosed. Thus, the Full Width at Half Maximum (FWHM) of these filters, i.e., the difference between the two values of the independent variable at which the dependent variable is equal to half of its maximum value, must be large enough to accommodate drifts in the emitter wavelength due to temperature fluctuations and production tolerances in both the emitter and the filter. This leads to the FWHM of the filters being very large in comparison to the bandwidth of the laser, and the excess background light which passes through the filter reduced by the SNR and therefore the range of the system.

For the particular application of automotive LiDAR systems, the bandpass filter should have a narrow bandwidth and a large acceptance angle (low angle shift) and a high transmission at the pass wavelength. It is also necessary to have a sufficient filter area, which depends on the LiDAR architecture, but for most designs, a large area rectangular shape is desirable. For automotive applications it is necessary that the device can operate over a large temperature range and be highly reliable. Static filters are available with a low angle shift, however due to production tolerances and temperature induced wavelength variation in the laser, and in order to ensure the emission wavelength overlaps with the pass band of the filter, it is necessary to have a wider pass band than the originally desired. This reduces SNR and hence the maximum range of the lidar. This can be solved on the emitter side through the use of lasers with very precise emission wavelength, but this adds cost, and lasers with the required performance are not widely available. Alternatively, this issue can be solved on the receiver side by using a tunable optical filter, but no previously existing technology has the required performance.

Although there may be some individual solutions to some of the identified problems, no particular solution is currently able to solve them simultaneously. For example, liquid crystal tunable filters are available with wide apertures and acceptance angles but are not able to meet the wide operating temperature range requirements. MEMS Fabry Perot (FP) tunable filters also have several drawbacks. They particularly suffer from high angular shifts which is an inherent problem of having only a single cavity filter. This is partly due to the Lorentzian shape of the spectral pass band which displays a maximum at one very precise wavelength. As the incidence angle of the light changes, the peak wavelength of the pass band shifts. With the Lorentzian shape, even smaller shifts than the FWHM produce a significant drop in transmission at the target wavelength.

An additional problem with existing MEMS FP tunable filters design is also the aperture area and shape. The target for these filters is to use the technology on top of the detector chip. In order to be used in combination with detector arrays (as opposed to small single point detectors) then the filter should have a relatively large area and ideally match the shape of the detector. These detectors are normally rectangular, and in the case of time-of-flight detectors, they often have one dimension significantly longer than the other. Most existing tunable filters are circular in shape, in order to create a symmetric actuation to keep a good parallelism between the mirrors. These circular filters are not appropriate because it is not feasible to create circular filters large enough for long and thin rectangular detectors using MEMS technology, since the required surface area of the membranes would be too large. However, the surface area of the detector is relatively much smaller and could be achievable for the filter if it could be made in a matching shape.

These limitations could be therefore improved if a filter with a top-hat passage band could be created, as suggested and disclosed in the present invention. The technical solution then resorts to the use of a set of mirrors with a wavelength dependent phase upon reflection (PUR), which enhances spectrum stability at different angles.

This is the basis of the optical concept for the current invention, although the invention builds on it by modifying the optical design to improve the Angle of Incidence (AOI) response and providing a practical MEMS device implementation designed for application on a LiDAR. Other proposed methods to improve the angle acceptance of these filters focus only on adding a phase upon reflection to the mirror. However, despite significant improvements, the acceptance angle can still not reach the required values. In addition, this proposed modification effectively introduces a trade-off between required actuation range and acceptance angle, meaning that large actuation ranges are required even for relatively small changes in the pass band.

The following technical features are therefore obtained in the proposed tunable filter, and represent a major improvement with regard to the present state of the art. Low angle shift (within the pass band wavelength); Large area rectangular shape; A top-hat pass band shape; Narrow pass band; High reliability; and Large operational temperature range.

The resulting tunable top-hat profile filter with Phase Upon Reflection (PUR) mirrors present the following advantages compared to existing MEMS tunable filters:
1. reduced dependency on the Angle of Incidence (AOI).
2. the spectral shape of the resulting pass band filter resembles a top-hat, rather than a Lorentzian.
3. Potential for large area device due to an electrode actuation mechanism which is strong enough to move large mirror membrane areas.
4. High wavelength accuracy: electrodes for sensing the large mirror membrane area position allow precise control of plate distance.
5. High uniformity over a large area: The sensing electrodes and multiple channel control allows compensation of plate parallelism.
6. Narrow pass band.
7. High transmission.
8. No pull in effect: Increased electro-mechanical reliability.

Instead of the prior suggested static filters, the use of the proposed tunable filter (i.e., filters whose pass frequency can be actively controlled) then offers the opportunity to match the Rx pass band according to the drifts taking place in the Tx.

To achieve the above-mentioned results, and overcome state of the art limitations, the present invention then discloses a MEMS tunable filter with two cavities. It is a tunable filter developed using a Fabry-Perot (FP) interferometer composed of two parallel mirrors with high reflectance separated by a certain distance. The distance between the two mirrors determines the pass band wavelength of the cavity. Therefore, by actively changing the cavity thickness (spacing between mirrors) it is possible to obtain a tunable filter. Constructively speaking, the developed and herein disclosed tunable filter device consists of a static mirror surrounded by two movable mirrors which are actuated such that both cavities between the static mirror and the movable mirrors maintain an equal spacing. The mirrors in one of the preferred embodiments of the present invention are modified Bragg reflectors, where a modification introduces a phase upon reflection of the reflected light. The reflectivity of the three combined mirror arrangement as above-mentioned, is designed such that the pass band of the filter provides a top-hat shape. The developed device preferably comprises a rectangular shape, with actuation and sensing along the edges.

### Brief description of the drawings

For better understanding of the present application, figures representing preferred embodiments are herein attached which, however, are not intended to limit the technique disclosed herein.

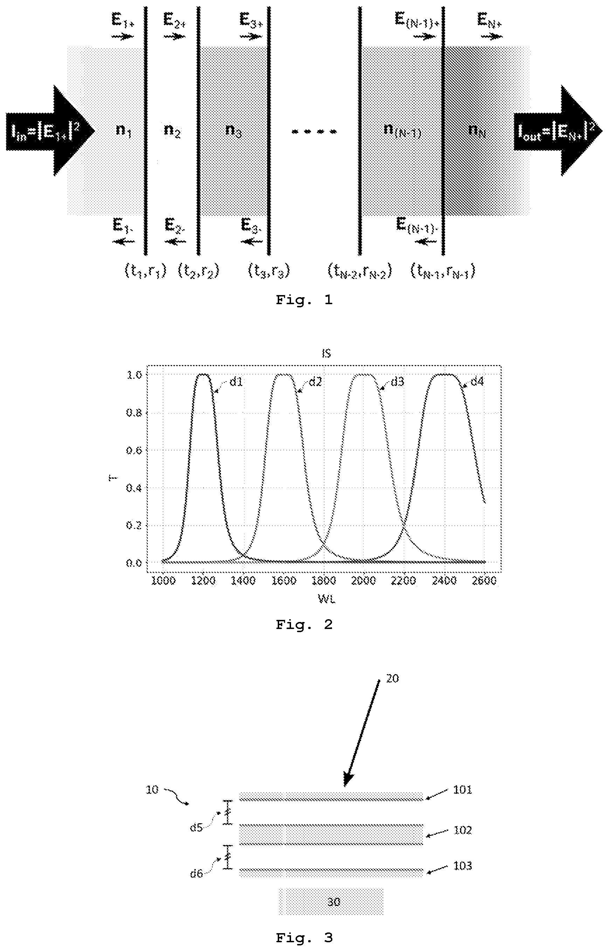

Figure 1 - illustrates a possible embodiment of a Multimirror Fabry-Perot (FP) cavity.
Figure 2 - illustrates an example of a three mirror FP cavity with mirrors equally spaced by a distance (d). The numerical references correlate with: IS - interferometer spectrum of the two cavity FP filter; T - Transmission; WL - Wavelength; d1 - 300 nm distance between mirrors; d2 - 400 nm distance between mirrors; d3 - 500 nm distance between mirrors; d4 - 600 nm distance between mirrors.
Figure 3 - illustrates a proposed embodiment for the structure of the proposed tunable dual cavity FP filter (10) installed over a top surface of a sensor (30). The three stacked mirrors, upper mirror (101), intermediate mirror (102) and lower mirror (103), in the illustrated preferred embodiment, are equally spaced since the distance (d5) between upper mirror (101) and the intermediate mirror (102) is the same that the distance (d6) between the intermediate mirror (102) and lower mirror (103), presenting a wavelength dependent PUR (dark gray surfaces). The incident light (20), in one of the proposed examples, traverses the filter (10) in the direction indicated by the arrow towards the sensor (30).

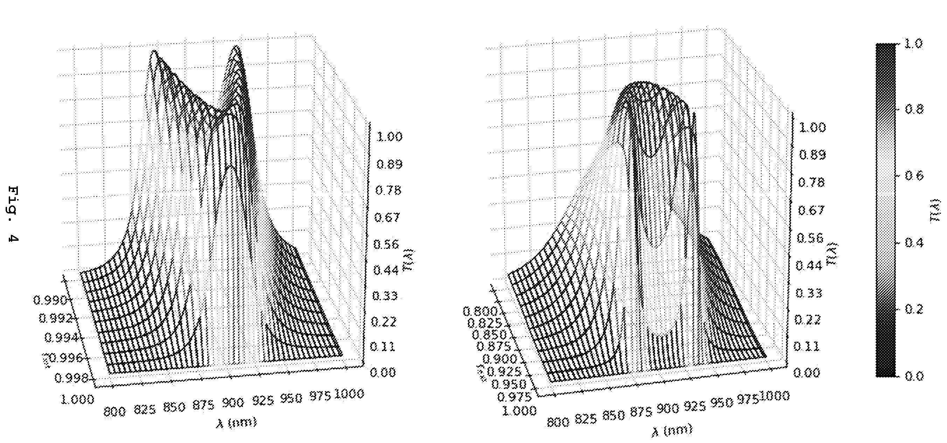

Figure 4 - illustrates the transmission spectrum of the proposed dual cavity Fabry-Perot (DCFP) filter in terms of the reflectivity of the intermediate (102) and external mirrors (101, 103), varying the internal mirror reflectivity (sx) and varying the reflectivity of the external mirrors (dx).

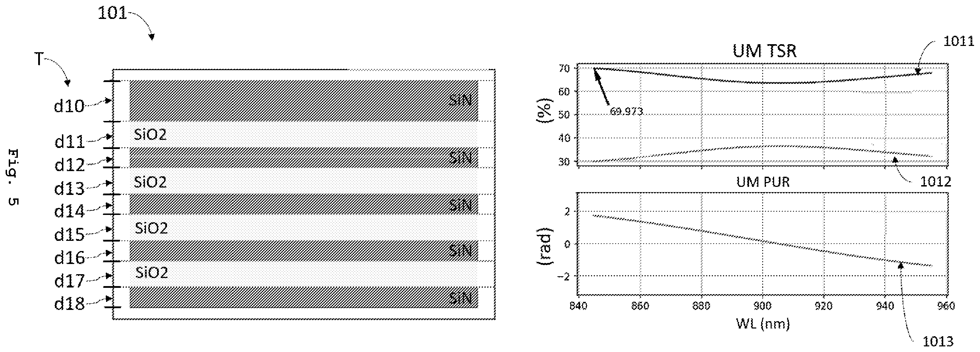

Figure 5 - illustrates a possible embodiment of the upper mirror (101) dielectric structure. The references relate to: T1 - thickness of the dielectric subtract in nm, wherein the distance d10 is 414.0 nm, distance d11 is 270.0 nm, distance d12 is 207.0 nm, distance d13 is 270.0 nm, distance d14 is 207.0 nm, distance d15 is 270.0 nm, distance d16 is 207.0 nm, distance d17 is 270.0 nm and distance d18 is 207.0 nm; SiN - silicon nitride dielectric layer; SiO2 - silicon dioxide dielectric layer. Additionally represented are the Upper Mirror Transmission Spectrum and Reflection spectrum (UM TSR) of the upper dielectric mirror (101) and Phase Upon Reflection (UM PUR). The wavelength (WL) in represented in nm, and the numerical references relate to: 1011 - R: p-pol - Reflectance p-polarization or parallel polarization; 1012 - T: p-pol - Transmittance p-polarization or parallel polarization; 1013 - p-pol - p-polarization or parallel polarization.

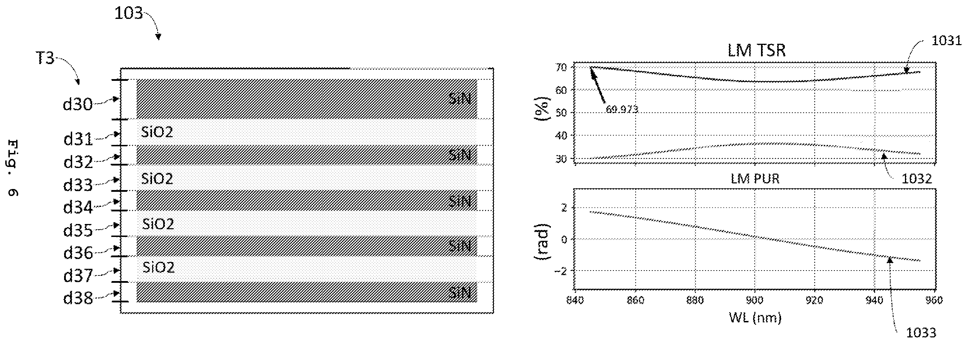

Figure 6 - illustrates a possible embodiment of the lower mirror (103) dielectric structure. The references relate to: T3 - thickness of the dielectric subtract in nm, wherein the distance d30 is 414.0 nm, distance d31 is 270.0 nm, distance d32 is 207.0 nm, distance d33 is 270.0 nm, distance d34 is 207.0 nm, distance d35 is 270.0 nm, distance d36 is 207.0 nm, distance d37 is 270.0 nm and distance d38 is 207.0 nm; SiN - silicon nitride dielectric layer; SiO2 - silicon dioxide dielectric layer. Additionally represented are the Lower Mirror Transmission Spectrum and Reflection spectrum (LM TSR) of the dielectric lower mirror (103) and Phase Upon Reflection (LM PUR). The wavelength (WL) in represented in nm, and the numerical references relate to: 1031 - R: p-pol - Reflectance p-polarization or parallel polarization; 1032 - T: p-pol - Transmittance p-polarization or parallel polarization; 1033 - p-pol - p-polarization or parallel polarization.

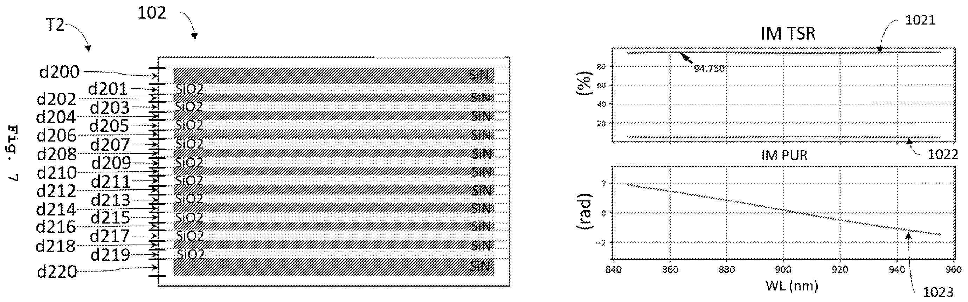

Figure 7 - illustrates a possible embodiment of the intermediate mirror (102) dielectric structure. The references relate to: T2 - thickness of the dielectric subtract in nm, wherein the distance d200 and d220 are 242.0 nm; distance d201, d203, d205, d207, d209, d211, d213, d215, d217, d219 are 158.0 nm; and distance d202, d204, d206, d208, d210, d212, d214, d216, d218 are 121.0 nm; SiN - silicon nitride dielectric layer; SiO2 - silicon dioxide dielectric layer. Additionally represented are the Intermediate Mirror Transmission Spectrum and Reflection spectrum (IM TSR) of the dielectric intermediate mirror (102) and Phase Upon Reflection (IM PUR). The wavelength (WL) in represented in nm, and the numerical references relate to: 1021 - R: p-pol - Reflectance p-polarization or parallel polarization; 1022 - T: p-pol - Transmittance p-polarization or parallel polarization; 1023 - p-pol - p-polarization or parallel polarization.

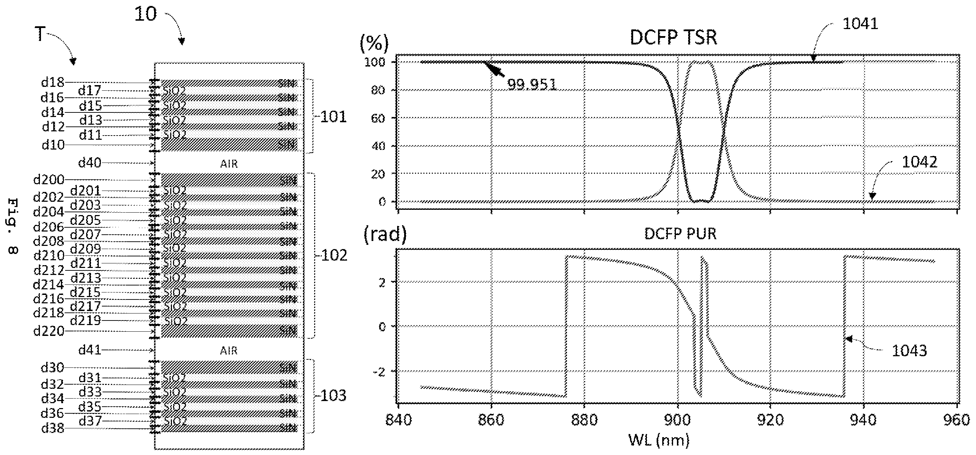

Figure 8 - illustrates a possible embodiment of the structure of the proposed double-cavity Fabry Perot filter (10) dielectric structure. The references relate to: T - thickness of the overall dielectric subtract in nm, wherein the distances d40 and d41 are 452.0 nm; and the remaining are related with the previously mentioned mirror (101, 102, 103) dimensions. SiN - silicon nitride dielectric layer; SiO2 -silicon dioxide dielectric layer. Additionally represented is the Dual Cavity Fabry-Perot Transmission Spectrum and Reflection (DCFP TSR) of the filter (10) and Phase Upon Reflection (DCFP PUR). The wavelength (WL) is represented in nm, and the numerical references relate to: 1041 - R: p-pol - Reflectance p-polarization or parallel polarization; 1042 - T: p-pol - Transmittance p-polarization or parallel polarization; 1043 - p-pol - p-polarization or parallel polarization.

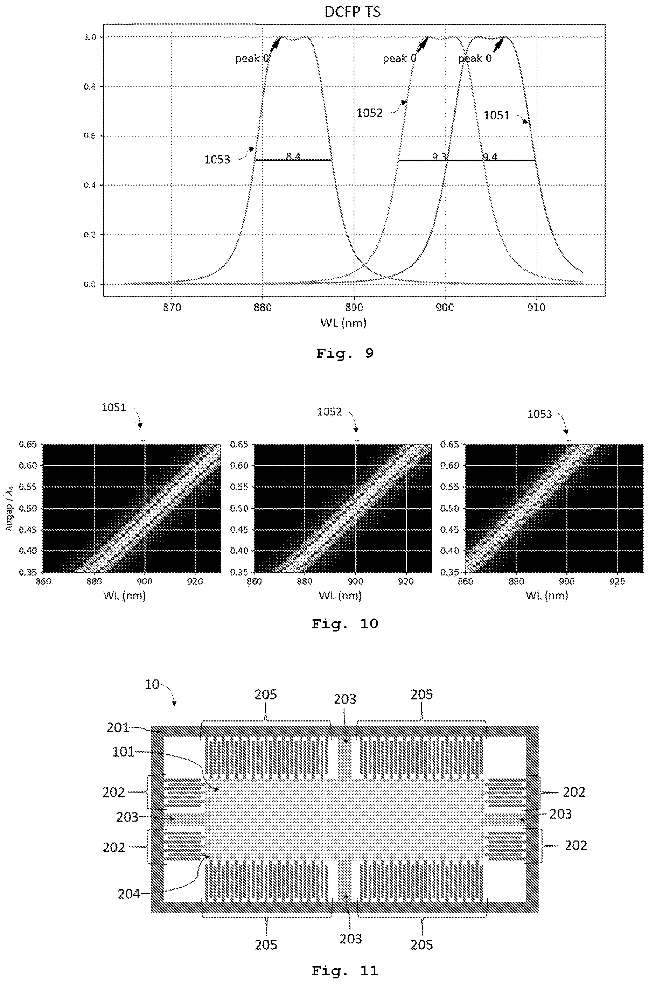

Figure 9 - illustrates the Transmission Spectrum of the double-cavity Fabry Perot (DCFP TS) filter for different angles of incidence on the filter over a wavelength (WL) range in nm, where the references relate to: 1051 - Angle of Incidence in 0 degrees; 1052 - Angle of Incidence in 10 degrees; 1053 - Angle of Incidence in 20 degrees.
Figure 10 - illustrates the Transmission Spectrum (TS) of the filter (10) in function of the airgap separating the mirrors, i.e., air distance between mirrors, for different Angles of Incidence (AOI) of the incident light (20). References refer to: WL - wavelength in nm; 1051 - Angle of Incidence in 0 degrees; 1052 - Angle of Incidence in 10 degrees; 1053 - Angle of Incidence in 20 degrees.
Figure 11 - illustrates the top view illustration of the structure of the filter (10) with electrode actuation wherein the reference numbers relate to: 101 - upper dielectric mirror; 201 - silicon outer frame; 202 - sensing electrodes; 203 - springs; 204 - silicon inner frame; 205 - actuation electrodes.

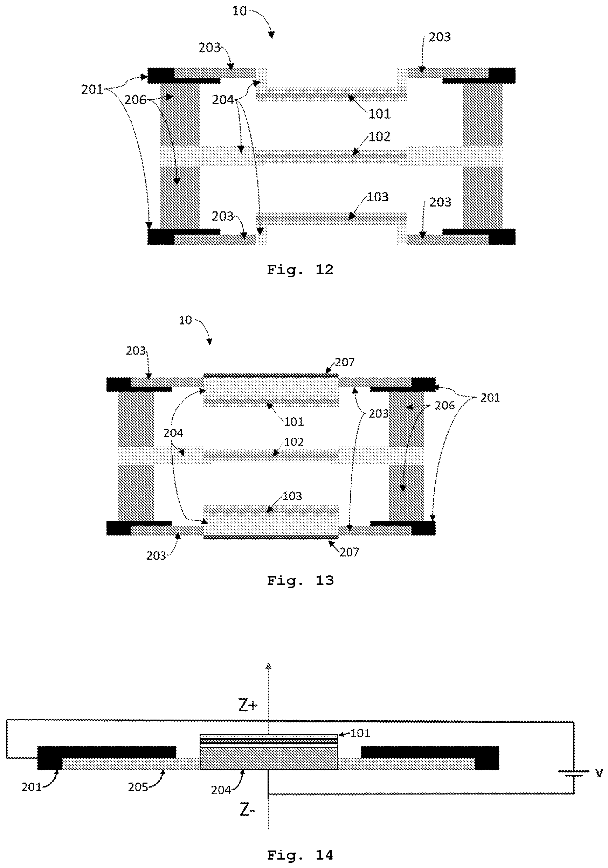

Figure 12 - discloses an illustration of the cross-section assembly of the proposed filter (10). In one of the preferred embodiments of assembly of the filter (10), the reference numbers relate to: 101 - upper dielectric mirror; 102 - intermediate dielectric mirror; 103 - lower dielectric mirror; 201 - silicon outer frame; 203 - spring; 204 - silicon inner frame; 206 - spacer. The proposed embodiment of the filter assembly uses two structures with the Back Side of the dielectric structures removed.
Figure 13 - discloses a second cross-section assembly of the proposed filter (10). In one of the preferred embodiments of assembly of the filter (10), the reference numbers relate to: 101 - upper dielectric mirror; 102 - intermediate dielectric mirror; 103 - lower dielectric mirror; 201 - silicon outer frame; 203 - spring; 204 - silicon inner frame; 206 - spacer; 207 - anti-reflection coating. In the proposed embodiment of the filter assembly, the back side of the filter is not removed, and an anti-reflection (AR) coating was added to these surfaces
Figure 14 - illustrates a third cross-section of the structure of the filter (10) wherein the reference numbers refer to: 101 - upper dielectric mirror; 201 - silicon outer frame; 204 - silicon inner frame; 205 - sensing electrodes. In one of the embodiments, a predetermined voltage V is applied between the fixed electrode frame (204), the movable electrodes (203) and the movable silicon substrate (201) frame.

### Description of Embodiments

With reference to the figures, some embodiments are now described in more detail, which are however not intended to limit the scope of the present application.

The invention herein disclosed allows to obtain a top-hat filter, i.e., a filter that presents an interval of maximum transmission instead of a single wavelength one (e.g. FP filters). Such filters can be obtained by multiple cavity FP filters. As briefly illustrated in Figure 1, the modelling of a multi-cavity FP filter uses a series of dielectric materials with refraction index *nᵢ,i=* 1 ... *N* which are interfaced by mirrors with field reflectivity *rᵢ,i* = 1 ... *N* - 1 and transmittivity *tᵢ, i* = 1 ... *N* - 1. The respective intensity reflectance and transmittances then result as *Rᵢ* = |*rᵢ*|² and *Tᵢ* = |*tᵢ*|² respectively. At each interface, the field transmitted in the next dielectric material and the field back reflected in the same dielectric material are indicated as *E*_{*i*+} and *E*_{*i*-}. Figure 1 illustrates its graphical description. Each interface corresponds to a transfer matrix, so by chain multiplying all the matrices results the transfer matrix of the whole structure.

Figure 2 illustrates a particular example of a two-cavity filter (with mirror field reflectivity r_ext, r_int, r_ext = 0.87, 0.99, 0.87). The mirror spacing (d) reduction from d4 to d1 causes the band pass window width to reduce, as well as the central frequency (WL) to reduce, though this is shown for a variation over a large spectrum. This FWHM variation, for the region of interest (i.e. tuning smaller than 50 nm on key wavelengths as 905 nm and 1550 nm) would be much less pronounced.

The proposed optical structure of the two-cavity filter (10) herein disclosed in the present invention comprises the following elements: Three mirrors, an upper mirror (101), an intermediate mirror (102) and a lower mirror (103), with matched reflectance, as illustrated in Figure 3.

In the illustration of Figure 4, and in one of the proposed embodiments, the two external mirrors, i.e., the upper mirror (101) and lower mirror (103), have the same reflectance, while the internal one, the intermediate mirror (102), has a larger reflectance. This may result in:
a. When mirrors (101, 102, 103) are "matched" in terms of reflectance, a top-hat flat transmission profile is obtained;
b. If the mirror reflectivity is "unmatched" in terms of reflectance, such that the intermediate mirror (102) reflectance is higher than the match equilibrium of the set of the remaining mirrors (101, 103), then the profile presents a peak with sub-unity transmission;
c. If the intermediate mirror (102) reflectivity is lower than the equilibrium of the set of mirrors, then the transmission spectrum presents two peaks with a non-zero valley in between. The depth of the valley increases by moving away from the equilibrium point. At the same time the external cut-off is sharper, so admitting a small central valley (e.g. <10% transmission drop) can be used to achieve sharper cut-offs.

Using a number of cavities greater than two can be used to obtain sharper cut-offs, getting increasingly squared bandpass filters.

The structure of the dielectric mirror filter (10) follows the following structure:
a. External mirrors (101, 103) with symmetrical structure - (*HL*)*^{Next}* × *HH;*
b. Intermediate mirror (102) *- H*(*HL*)*^{Nint}* × *HH*;

The intermediate mirror (102) is static while the other two remaining mirrors (101, 103) are actuated with out-of-plane MEMS actuation electrostatic electrode drives. In a layered dielectric structure, two or more dielectric materials are used. In this case we are focusing on two dielectric materials, where *H* indicates the material with higher index of refraction while *L* refers to the material with lower index of refraction. The thicknesses are expressed in quarter wavelength in the material (lambda/4/index of refraction of material). Therefore, HL points to a basic structure (stack) with a '*H*' dielectric layer with a quarter wavelength thick followed by a '*L*' dielectric with a quarter wavelength thick. Moreover, for shortness, if a structure is repeated, the power elevation is used, so that, (HL)³ = HLHLHL. Nₑₓₜ and Nᵢₙₜ are the number of stacks for the external and internal mirrors. The mirror design might also see different thicknesses than an optical quarter wavelength. Other embodiments might address dielectric thicknesses other than quarter wavelength.

The mechanical structures of the herein proposed tunable filter (10) are formed by three mechanical structures, of which one is static in the middle (102), and the remaining two (101, 103) are MEMS actuated structures on each side (top and bottom) of the central structure (Figure 12). The central fixed structure has a single membrane mirror (102) that is static; and the top and bottom structures also present each a mirror membrane (101, 103), supported by a movable out-of-plane electrostatic mechanism. There is an overlapping region defining the optical aperture of the device (10), located in the middle region of the membranes, where there is an unobstructed optical path. The mirrors located on the top (101) and bottom (103) structures are positioned so that they directly face the internal membrane (102) (meaning the top structure device is flipped), reducing the initial distance between these elements. The actuation mechanism of the filter is described as follows: the mirror membranes (101, 103) are supported on a central movable frame (204), machined on a dielectric layer, such as silicon, or a device layer of a (Silicon on Insulator) SOI wafer, which is anchored to an outer fixed frame (201) by means of a set of springs (203) like illustrated in Figure 11. The gaps between the central structure movable frame (204) and the outer fixed frame (201) are populated with sets of interdigitated electrodes (202, 205) that are used to provide the electrostatic out-of-plane actuation. The structure of said electrodes (202, 205), of the movable frame structure (204) and the fixed frame (201) are distinct. To provide out-of-plane electrostatic actuation, the actuation electrode (205) structures have asymmetric vertical heights, and a minimized lateral gap between the electrodes fixed on the fixed frame (201) side and the electrodes (205) fixed on the inner movable frame structure (204) (Figure 11). The actuation electrode (205) fixed to the movable frame (204) may share the same electrical potential, opposite to the electrical potential of the electrodes connected to the fixed frame (201). Each set of electrodes (205) can be actuated independently to compensate misalignments and to enhance parallelism. Additional sets of electrodes can be used to provide sensing feedback for closed-loop operation.

The top and bottom mirror (101, 103) membranes can improve the overall transmissivity of the filter (10) by avoiding losses on the dielectric layer (201) that supports the mirror stack. This can be performed by opening a window on the dielectric layer defined by the optical path area and applying an anti-reflection coating (207) on the dielectric layer on the opposite face to the dielectric mirror.

All three structures must be assembled in a single filter device (10) ensuring the correct relative position of each and keeping the proper distance (height) between them - Figure 12 and 13. The nominal distance between the upper mirror (101), intermediate mirror (102) and lower mirror (103) structure is achieved by using microfabricated spacers (206). These spacers (206) set the nominal positioning and distancing between the mirrors (101, 102, 103) which form the filter (10), within the tunable displacement region. The top, middle and bottom elements (101, 102, 103) are microfabricated separately, avoiding the complexity of a monolithic process. The upper and lower mirror structures (101, 102) can be equally arranged, except for the upper structure (101) which is flipped during assembly. The upper and lower (101, 103) structures each have a spacer (206) that is micromachined within the tolerances of the tuning region of the out-of-plane actuator. When all three parts are finished, they must be assembled through a particular sequence:
a. Placing of the lower element, where the inner movable structure frame (204) with the bottom mirror (103) is facing upwards, i.e., in the opposite direction of the sensor (30);
b. Bonding of the static intermediate mirror (102) structure to the lower spacer (206);
c. Placing of the upper mirror element (101) flipped in an opposite manner with respect to the lower mirror (103) so that the inner movable frame (204) with the mirror (101) is facing the static intermediate mirror membrane (102) and the sensor (30). These spacers (206) of the top element are bonded to the middle frame.

Alignment marks are used to align all the components of the filter (10) and to keep the optical path unobstructed.

Both exterior top and bottom mirror elements (101, 103) of the filter (10) require electrical connections to apply the electrostatic actuation on the actuation electrodes (205), since they are electrically decoupled, there will be one of these connections for each part:
- Ground plane, to be applied on the inner electrodes (connected to the inner frame (204));
- Distinct actuation planes to actuate individually on the different sets of electrodes (connected to the outer frame (201)) to achieve parallelism.

The sensing electrodes (202) may be imputed to a C/V (capacitance to voltage) transductor, for example. Therefore, and based on the above, the sensing electrodes (202), as well as the actuation electrodes (205) can be made of the same material, but they act differently and accordingly with an electrical bias.

With regard to the mirrors illustrated in figures 5, 6 and 7, in one of the proposed embodiments of the present invention, it is suggested the use of a dielectric structure in the set of mirrors (101, 102, 103) which is composed by a stacked combination of layers. This combination of layers can be composed within a wide range of materials. In one of the proposed embodiments of the current invention, and as suggested throughout said figures, it may be comprised of a stack of SiN/SiO2. However, additional materials can be used such as Ge (germanium), MgF2 (Magnesium fluoride), Si (Silicon (amorphous or crystalline)), AlN (Aluminum nitride), Al2O3 (Aluminum oxide), ITO (Indium Tin Oxide), TiO2 (Titanium dioxide), ZnO (Zinc Oxide). Additionally, combinations of stacked materials can be used. It is important to ensure that the materials involved have a negligible absorption in the operating wavelength range and different indexes of refraction. The larger the difference refractive index between adjacent materials, the less layers are required in each stack. However, design features would require careful planning in order to obtain the most suitable solution.

Back on the actuation electrodes (205), they are configured to produce movement in the upper and lower mirrors (101, 103) which are supported by the inner frame (204), and further supported to the outer frame (201) by means of a set of springs (203). The sensing electrodes (202) have the same geometry of the actuation electrodes (205) but are located in a perpendicular positioning with regard to the actuation electrodes (205). In the proposed example, the actuation electrodes (205) are located along the longest sides of the filter (10) in at least two sections comprised between the outer and inner frame (201, 204) and in between the springs (203) whish ensure the stabilization of the mirrors (101, 103), said springs (203) being centrally positioned in the middle of the structure of the filter (10). The sensing electrodes (202) are located in the shortest side of the filter (10), in a perpendicular arrangement in relation to the actuation electrodes (205), in at least two sections comprised between the outer and inner frame (201, 204) and in between the springs (203), that again, aim to ensure the stabilization of the mirrors (101, 103). In the proposed example, the positioning and the dimension of the actuation and the sensing electrodes (202, 205), as well as of the filter (10) and mirrors (101, 102, 103), should not be understood by being a limiting feature, since size and form variations with regard to the above disclosed could also ensure the similar behaviour of the filter (10). The sensing electrodes (202) are not voltage driven; they are only probing the capacitance to measure the position of the mirrors (101, 103). The springs (203) are the mechanical elements that connect the floating mirror membrane (101, 103) to the silicon external frame (201).

In both cases, the mirror membranes (101, 102, 103) are deposited on a silicon substrate identified as an inner frame (204). To improve optical transmission, the silicon is etched out until the membrane, while in the second case it is maintained, but an anti-reflection coating is deposited on the other side of the substrate. This can be a critical choice depending on the target design wavelength. As silicon strongly absorbs wavelengths of 905 nm, etching out the silicon substrate beneath the mirror is necessary for this target wavelength. For wavelengths of 1550 nm, silicon is essentially transparent, and the second option might be more mechanically robust. The anti-reflection coating (207) improves transmission. For 1550 nm this leads to the improvement of the mechanical robustness.

In the proposed embodiment of the filter assembly illustrated on Figure 13, the filter (10) comprises anti-reflection (AR) coating (207) on the posterior/outer surface of the lower mirror (103), and on the anterior/outer surface of the upper mirror (101). As suggested by this illustration, the anti-reflection (AR) coating (207) is placed outside of both of the cavities, i.e., outside the upper cavity created between the upper and intermediate mirror (101, 102), and outside the lower cavity created between the intermediate and lower mirror (102, 103). This anti-reflection coating (207) allows to improve transmission, improving mechanical robustness of the filter for wavelengths of 1550 nm.

In one of the embodiments illustrated in Figure 14, a voltage signal (V) is applied between the silicon inner frame (204), the movable actuation electrodes (205) and the outer silicon frame (201). In order to keep the distance in between the mirrors controlled, one might apply a signal to the actuation electrode (205), probing the mirror position using the sensing electrode (202) and correct for misplacements, acting on the input signal (V), in a feedback loop mode.

## Claims

1. Tunable optical filter (10) adapted to be installed over a top surface of a sensor (30), comprising
a set of at least three stacked dielectric mirrors parallelly adjacent to the plane of installation of the sensor (30), the at least three stacked dielectric mirrors comprising an upper mirror (101), an intermediate mirror (102) and a lower mirror (103), the set of at least three stacked mirrors being spaced within a variable distance to create at least two independent and adjacently equal volumetry cavities between the upper mirror (101) and the intermediate mirror (102) and between the intermediate mirror (102) and the lower mirror (103), the intermediate mirror (102) being fixed with regard to the sensor (30) and the upper mirror (101) and lower mirror (103) being movable with regard to the sensor (30);
**characterized by**
the upper mirror (101) and the lower mirror (103) movements being activated by means of actuation electrodes (205) which are configured to ensure equal distancing between the upper mirror (101) and the intermediate mirror (102) and between the intermediate mirror (102) and the lower mirror (103).

2. Tunable optical filter (10) according to claim 1, wherein the intermediate mirror (102) comprises higher reflectance than the upper mirror (101) and the lower mirror (103).

3. Tunable optical filter (10) according to previous claims 1 and 2, wherein the intermediate mirror (102) comprises lower reflectance than the upper mirror (101) and the lower mirror (103).

4. Tunable optical filter (10) according to previous claims 1, 2, and 3, wherein the upper mirror (101) and the lower mirror (103) are supported by independent inner movable frames (204) which are anchored to independent outer fixed frames (201) by a set of independent springs (203).

5. Tunable optical filter (10) according to previous claim 4, wherein a surrounding gap between the inner movable frame (204) and the outer fixed frame (201) is filled with sets of electrodes comprised of actuation electrodes (205) and sensing electrodes (202).

6. Tunable optical filter (10) according to previous claims 1 and 5, wherein the actuation electrodes (205) comprise a set of electrodes with asymmetric vertical heights and minimized lateral gaps between them, said electrodes being sequentially fixed to the outer fixed frame (201) and fixed to the inner movable frame (204).

7. Tunable optical filter (10) according to previous claims 1, 4, 5 and 6, wherein the actuation electrodes (205), fixed to the inner movable frame (204), share the same electrical potential, the actuation electrodes (205), fixed to the outer fixed frame (201), share also the same electrical potential, and where a potential difference is applied between said actuation electrodes (205) fixed to the outer fixed frame (201) and said actuation electrodes (205) fixed to the inner movable frame (204).

8. Tunable optical filter (10) according to previous claim 5, wherein the sensing electrodes (202) comprise the same geometry of the actuation electrodes (205) and are positioned in a perpendicular arrangement with respect to the actuation electrodes (205).

9. Tunable optical filter (10) according to any of the previous claims, wherein a nominal distance between the upper mirror (101), intermediate mirror (102) and lower mirror (103) structure is ensured by a set of spacers (206) which promote the mechanical support between the outer fixed frame (201) of the lower mirror (103) with the inner movable frame (204) of the intermediate mirror (102), and of the inner movable frame (204) of the intermediate mirror (102) with the outer fixed frame (201) of the upper mirror (101).

10. Tunable optical filter (10) according to any of the previous claims, wherein an outer surface of the lower mirror (103) and an outer surface of the upper mirror (101), both outer surfaces being external to the adjacently equal volumetry cavities, comprise an anti-reflection coating (207).

## Patentansprüche

1. Abstimmbarer optischer Filter (10), der zur Installation über einer Oberseite eines Sensors (30) geeignet ist, umfassend
einen Satz von mindestens drei gestapelten dielektrischen Spiegeln, die parallel angrenzend an die Installationsfläche des Sensors (30) angeordnet sind, wobei die mindestens drei gestapelten dielektrischen Spiegel einen oberen Spiegel (101), einen mittleren Spiegel (102) und einen unteren Spiegel (103) umfassen, wobei der Satz von mindestens drei gestapelten Spiegeln in einem variablen Abstand angeordnet ist, um mindestens zwei unabhängige und benachbart gleiche Volumenkavitäten zwischen dem oberen Spiegel (101) und dem mittleren Spiegel (102) sowie zwischen dem mittleren Spiegel (102) und dem unteren Spiegel (103) zu schaffen, wobei der mittlere Spiegel (102) in Bezug auf den Sensor (30) fixiert ist und der obere Spiegel (101) und der untere Spiegel (103) in Bezug auf den Sensor (30) beweglich ist;
**gekennzeichnet dadurch, dass**
die Bewegungen des oberen Spiegels (101) und des unteren Spiegels (103) mittels Betätigungselektroden (205) aktiviert werden, die so konfiguriert sind, dass sie einen gleichen Abstand zwischen dem oberen Spiegel (101) und dem mittleren Spiegel (102) sowie zwischen dem mittleren Spiegel (102) und dem unteren Spiegel (103) gewährleisten.

2. Abstimmbarer optischer Filter (10) nach Anspruch 1, wobei der mittlere Spiegel (102) einen größeren Reflexionsgrad als der obere Spiegel (101) und der untere Spiegel (103) aufweist.

3. Abstimmbarer optischer Filter (10) nach den vorhergehenden Ansprüchen 1 und 2, wobei der mittlere Spiegel (102) einen geringeren Reflexionsgrad als der obere Spiegel (101) und der untere Spiegel (103) aufweist.

4. Abstimmbarer optischer Filter (10) nach den vorhergehenden Ansprüchen 1, 2 und 3, wobei der obere Spiegel (101) und der untere Spiegel (103) von unabhängigen inneren beweglichen Rahmen (204) getragen werden, die durch einen Satz unabhängiger Federn (203) an unabhängigen äußeren Festrahmen (201) verankert sind.

5. Abstimmbarer optischer Filter (10) nach dem vorhergehenden Anspruch 4, wobei ein umgebender Spalt zwischen dem inneren beweglichen Rahmen (204) und dem äußeren Festrahmen (201) mit Sätzen von Elektroden gefüllt ist, die aus Betätigungselektroden (205) und Sensorelektroden (202) bestehen.

6. Abstimmbarer optischer Filter (10) nach den vorhergehenden Ansprüchen 1 und 5, wobei die Betätigungselektroden (205) einen Satz von Elektroden mit asymmetrischen vertikalen Höhen und minimierten seitlichen Spalten zwischeneinander umfassen, wobei die Elektroden nacheinander am äußeren Festrahmen (201) befestigt und am inneren beweglichen Rahmen (204) befestigt werden.

7. Abstimmbarer optischer Filter (10) nach den vorhergehenden Ansprüchen 1, 4, 5 und 6, wobei die Betätigungselektroden (205), die am inneren beweglichen Rahmen (204) befestigt sind, das gleiche elektrische Potential aufweisen, wobei die amäußeren Festrahmen (201) befestigten Betätigungselektroden (205)ebenfalls das gleiche elektrische Potential aufweisen und dass zwischen den am äußeren Festrahmen (201) befestigten Betätigungselektroden (205) und den am inneren beweglichen Rahmen (204) befestigten Betätigungselektroden (205) eine Potentialdifferenz angelegt wird.

8. Abstimmbarer optischer Filter (10) nach dem vorhergehenden Anspruch 5, wobei die Sensorelektroden (202) die gleiche Geometrie wie die Betätigungselektroden (205) aufweisen und senkrecht zu den Betätigungselektroden (205) angeordnet sind.

9. Abstimmbarer optischer Filter (10) nach einem der vorhergehenden Ansprüche, wobei ein Nennabstand zwischen der Struktur des oberen Spiegels (101), des mittleren Spiegels (102) und des unteren Spiegels (103) durch einen Satz von Abstandshaltern (206) gewährleistet wird, welche die mechanische Stütze zwischen dem äußeren Festrahmen (201) des unteren Spiegels (103) und dem inneren beweglichen Rahmen (204) des mittleren Spiegels (102) sowie zwischen dem inneren beweglichen Rahmen (204) des mittleren Spiegels (102) und dem äußeren Festrahmen (201) des oberen Spiegels (101) gewährleistet.

10. Abstimmbarer optischer Filter (10) nach einem der vorhergehenden Ansprüche, wobei eine Außenfläche des unteren Spiegels (103) und eine Außenfläche des oberen Spiegels (101), wobei beide Außenflächen, die außerhalb der benachbarten Kavitäten mit gleichem Volumen liegen, eine Antireflexbeschichtung (207) aufweisen.

## Revendications

1. Filtre optique accordable (10) adapté pour être installé sur la surface supérieure d'un capteur (30), comprenant
un ensemble d'au moins trois miroirs diélectriques empilés, parallèlement adjacents au plan d'installation du capteur (30), les au moins trois miroirs diélectriques empilés comprenant un miroir supérieur (101), un miroir intermédiaire (102) et un miroir inférieur (103), l'ensemble des au moins trois miroirs empilés étant espacés à une distance variable pour créer au moins deux cavités de volumétrie indépendantes et adjacentes entre le miroir supérieur (101) et le miroir intermédiaire (102) et entre le miroir intermédiaire (102) et le miroir inférieur (103), le miroir intermédiaire (102) étant fixé par rapport au capteur (30) et le miroir supérieur (101) et le miroir inférieur (103) étant mobiles par rapport au capteur (30) ;
**caractérisé par**
les mouvements du miroir supérieur (101) et du miroir inférieur (103) étant activés au moyen d'électrodes d'actionnement (205) qui sont configurées pour garantir un éloignement égal entre le miroir supérieur (101) et le miroir intermédiaire (102) et entre le miroir intermédiaire (102) et le miroir inférieur (103).

2. Filtre optique accordable (10) selon la revendication 1, dans lequel le miroir intermédiaire (102) comprend une réflectance plus élevée que le miroir supérieur (101) et le miroir inférieur (103).

3. Filtre optique accordable (10) selon les revendications précédentes 1 et 2, dans lequel le miroir intermédiaire (102) comprend une réflectance plus faible que le miroir supérieur (101) et le miroir inférieur (103).

4. Filtre optique accordable (10) selon les revendications précédentes 1, 2 et 3, dans lequel le miroir supérieur (101) et le miroir inférieur (103) sont supportés par des cadres internes mobiles indépendants (204) qui sont ancrés à des cadres externes fixes indépendants (201) par un ensemble de ressorts indépendants (203).

5. Filtre optique accordable (10) selon la revendication précédente 4, dans lequel un espace entourant entre le cadre interne mobile (204) et le cadre externe fixe (201) est rempli d'ensembles d'électrodes comprenant des électrodes d'actionnement (205) et des électrodes de détection (202).

6. Filtre optique accordable (10) selon les revendications précédentes 1 et 5, dans lequel les électrodes d'actionnement (205) comprennent un ensemble d'électrodes ayant des hauteurs verticales asymétriques et des espaces latéraux minimisés entre elles, lesdites électrodes étant fixées de manière séquentielle au cadre externe fixe (201) et fixées au cadre interne mobile (204).

7. Filtre optique accordable (10) selon les revendications précédentes 1, 4, 5 et 6, dans lequel les électrodes d'actionnement (205) fixées au cadre interne mobile (204) partagent le même potentiel électrique, les électrodes d'actionnement (205) fixées au cadre externe fixe (201) partagent aussi le même potentiel électrique, et où une différence de potentiel est appliquée entre lesdites électrodes d'actionnement (205) fixées au cadre externe fixe (201) et lesdites électrodes d'actionnement (205) fixées au cadre interne mobile (204).

8. Filtre optique accordable (10) selon la revendication précédente 5, dans lequel les électrodes de détection (202) comprennent la même géométrie que les électrodes d'actionnement (205) et sont positionnées dans un agencement perpendiculaire par rapport aux électrodes d'actionnement (205).

9. Filtre optique accordable (10) selon l'une quelconque des revendications précédentes, dans lequel une distance nominale entre la structure du miroir supérieur (101), du miroir intermédiaire (102) et du miroir inférieur (103) est assurée par un ensemble d'entretoises (206) qui favorisent le support mécanique entre le cadre externe fixe (201) du miroir inférieur (103) et le cadre interne mobile (204) du miroir intermédiaire (102), et entre le cadre interne mobile (204) du miroir intermédiaire (102) et le cadre externe fixe (201) du miroir supérieur (101).

10. Filtre optique accordable (10) selon l'une quelconque des revendications précédentes, dans lequel une surface extérieure du miroir inférieur (103) et une surface extérieure du miroir supérieur (101), les deux surfaces étant externes aux cavités de volumétrie adjacentes et égales, comprennent un revêtement antireflet (207).
